# EUROPÄISCHE PATENTANMELDUNG

(11) **EP 1 189 442 A2**
(43) Veröffentlichungstag der Anmeldung: **20.03.2002**
(21) Anmeldenummer: 01120462.5
(22) Anmeldetag: 28.08.2001
(51) Int. Cl.: H04N 7/18

(54) **Arealüberwachung mittels Standbildvergleich**

(30) Priorität: 13.09.2000 DE 10045504
(71) Anmelder: Dynamit Nobel GmbH Explosivstoff- und Systemtechnik, 53840 Troisdorf (DE)
(72) Erfinder: Aebi, Walter, 4586 Kyburg-Buchegg (CH); Göricke. Detlef, 51143 Köln (DE); Schäfer, Heinz, 28865 Lilienthal (DE); Zemler, Andreas, 53842 Troisdorf (DE)
(74) Vertreter: Uppena, Franz, Dr.

(57) **Zusammenfassung**

Diese erzeugen kontinuierlich ein Bild des zu überwachenden Areals, das auf einem Bildschirm sichtbar gemacht wird und stets den augenblicklichen Zustand des Areals wiedergibt. Eine Überwachung in der hier beschriebenen Weise erfordert allerdings eine kontinuierliche Energieversorgung der Kamera auf einem gleichbleibenden Niveau. Eine Energieversorgung der Kamera oder der Kameras auf einem gleichbleibenden Niveau, beispielsweise durch einen Anschluß an ein öffentliches Versorgungsnetz, ist aber nicht immer möglich. In der Regel steht nur ein begrenzter Energievorrat in Form einer Batterie oder eines Akkus zur Verfügung.

Erfindungsgemäß wird deshalb vorgeschlagen, daß durch die Kamera in vorgegebenen Zeitabständen oder zu vorgegebenen Zeitpunkten ein Bild als Momentaufnahme von dem Areal erzeugt wird, dass dieses Bild erst nach Abspeicherung aller zur Erzeugung des Bildes erforderlichen Signale der Bildpunkte als Standbild an eine Kontrollstation übermittelt wird und dass das Bild erst dann auf dem Bildschirm eines Monitors in der Kontrollstation angezeigt wird, wenn sämtliche Signale übertragen und das Bild vollständig aufgebaut ist.

## Beschreibung

Die Erfindung betrifft ein Verfahren zur Überwachung eines Areals, das im Blickfeld von mindestens einer Kamera mit elektronischer Bilderzeugung liegt, wozu durch die Kamera in vorgegebenen Zeitabständen oder zu vorgegebenen Zeitpunkten ein Bild von dem Areal erstellt wird, dass dieses Bild erst nach Abspeicherung aller zur Erstellung des Bildes erforderlichen Signale der Bildpunkte als Standbild an eine Kontrollstation übermittelt wird und dass das Bild erst dann zur Auswertung bereitsteht, vorzugsweise auf dem Bildschirm eines Monitors in der Kontrollstation angezeigt wird, wenn sämtliche Signale vollständig übertragen sind und das Bild vollständig aufgebaut ist.

Das zu überwachende Areal kann beispielsweise ein Firmengelände sein oder ein militärisches Sperrgebiet oder während einer Kampfhandlung ein Areal, in das das Eindringen feindlicher Truppen verhindert werden soll. Zur Überwachung eines Areals werden in der Regel Fernsehkameras eingesetzt. Diese erzeugen kontinuierlich ein Bild des zu überwachenden Areals, das auf einem Bildschirm sichtbar gemacht wird und stets den augenblicklichen Zustand des Areals wiedergibt.

Eine Überwachung in der hier beschriebenen Weise erfordert allerdings eine kontinuierliche Energieversorgung der Kamera auf einem gleichbleibenden Niveau. Gerade aber im militärischen Bereich, insbesondere bei der Überwachung eines Areals, das vor dem Eindringen des Feindes geschützt werden soll, ist eine Energieversorgung der Kamera oder der Kameras auf einem gleichbleibenden Niveau, beispielsweise durch einen Anschluß an ein öffentliches Versorgungsnetz, nicht möglich. In der Regel steht nur ein begrenzter Energievorrat in Form einer Batterie oder eines Akkus zur Verfügung.

Aufgabe der vorliegenden Erfindung ist es deshalb, den für die Überwachungskameras eines Areals zur Verfügung gestellten Energievorrat bestmöglich zu nutzen.

Die Lösung der Aufgabe erfolgt erfindungsgemäß mit Hilfe der kennzeichnenden Merkmale des ersten Anspruchs. Vorteilhafte Ausgestaltungen der Erfindung werden in den Unteransprüchen beansprucht.

Statt kontinuierlich von dem zu überwachenden Areal ein Bild zu erzeugen und dieses an eine Kontrollstation zu übermitteln, erzeugt die Kamera mit der elektronischen Bilderzeugung erfindungsgemäß nur in vorgegebenen Zeitabständen oder zu vorgegebenen Zeitpunkten ein Bild von dem Areal. Während das Bild erzeugt wird, werden die zur Erzeugung des Bildes erforderlichen Signale der Bildpunkte zunächst abgespeichert, bis dass ein vollständiges Bild als Momentaufnahme, ein Standbild, erzeugt worden ist. Erst nach vollständiger Abspeicherung aller zur Erzeugung des Bildes erforderlichen Signale der Bildpunkte werden diese Signale an eine Kontrollstation übermittelt. Dort wird aus den nacheinander eintreffenden Bildsignalen ein Bild aufgebaut. Dieses Bild kann bis zu seinem vollständigen Aufbau, bis alle Bildsignale vollständig übermittelt worden sind, wiederum zunächst in einem Speicher zwischengespeichert werden. Erst dann steht es zur Auswertung bereit und kann beispielsweise auf dem Bildschirm eines Monitors angezeigt werden.

Die Erfindung bietet die Möglichkeit, Energie zu sparen und somit die Energievorräte für Überwachungskameras, die nicht an einer kontinuierlich Strom liefernden Energiequelle angeschlossen sind, wesentlich zu schonen und somit für eine verlängerte Einsatzdauer zu qualifizieren. Nach der Erfindung erfolgt die Signalübertragung nicht, wie bei einer Fernsehkamera sonst üblich, während der Zeit, in der ein Bild des Areals auch erzeugt wird. Die Signale der Bildpunkte werden zunächst einmal abgespeichert und dann als kompletter Datensatz an die Kontrollstation übermittelt. Dabei kann dieser Datensatz zuvor vorteilhaft komprimiert werden, so dass die Übertragungsdauer, die nur von der Geschwindigkeit der Übertragung abhängig ist, auf ein Minimum reduziert wird.

Weiterhin können die Zeitpunkte der Bilderzeugung bzw. die Zeitdauer zwischen den jeweiligen Bilderzeugungen auf den Bedarf eingestellt werden. Die Zeitabstände zwischen den einzelnen Bilderzeugungen können zwischen Minuten, Stunden und Tagen liegen, je nachdem welche Bewandtnis es mit der Überwachung des Areals hat. Steht beispielsweise der Einbruch eines Feindes in ein zu verteidigendes Gebiet zuvor, wird die Bilderzeugung naturgemäß in kürzeren Zeitabständen erfolgen als wenn eine langsam verlaufende Veränderung beobachtet werden soll, beispielsweise das Wachstum einer Pflanze.

Als vorteilhaft hat sich die Übertragung der Bildsignale an die Kontrollstation im Niederfrequenz-Bereich herausgestellt.

Die Überwachung kann dadurch wesentlich vereinfacht werden und sogar automatisiert werden, wenn das derzeitige Bild mit dem in einem Bildspeicher der Kontrollstation abgespeicherten Bild verglichen wird, das vor diesem Bild erzeugt wurde. Zur Überprüfung brauchen die beiden Bilder nur zur Deckung gebracht werden und auf eine mögliche Abweichung voneinander abgetastet werden. Eine eventuelle Abweichung kann zumindest durch Auslösen eines Alarms auf die veränderte Situation hinweisen. Gegebenenfalls können aber auch entsprechende Maßnahmen automatisch ausgelöst werden. Das kann beispielsweise bei der Überwachung von Industrieanlagen der Fall sein, wenn plötzlich der Ausbruch eines Feuers festgestellt wird. Hier könnte automatisch eine Löschvorrichtung ausgelöst werden.

Während eine Kamera ein Areal nur aus einem bestimmten Blickwinkel heraus betrachtet, kann es von Vorteil sein, wenn mindestens eine weitere Kamera das zu überwachende Areal aus einem anderen Blickwinkel überwacht. Dabei können insbesondere die Bereiche eingesehen werden, die von der ersten Kamera nicht überwacht werden können, weil sie nicht einsehbar sind. Auch hier gilt die gleiche Übertragungsweise der Bildsignale an die Kontrollstation wie bei nur einer Kamera. Weiterhin kann auch hier, entsprechend der ersten Kameraüberwachung, jedes von einer Kamera erzeugte Bild mit dem von ihr zuvor erzeugten Bild verglichen werden und auch hier kann bei einer festgestellten Abweichung ebenfalls mindestens Alarm ausgelöst werden.

Zur Einsparung der Energie ist es vorteilhaft möglich, dass die Kamera bzw. die Kameras zwischen den Zeitpunkten, an denen ein Bild des Areals erzeugt wird, in den Stand-by-Modus geschaltet werden.

Wird das Areal von zwei oder mehr Kameras überwacht, können die Kameras im Wechsel ein Bild von dem zu überwachenden Areal erzeugen. So erzeugt immer nur eine Kamera ein Bild, während die übrigen Kameras in den Stand-by-Modus geschaltet sind. Diese Art der Überwachung hat den Vorteil, dass das Areal kontinuierlich überwacht wird, wobei die Überwachung ständig aus unterschiedlichen Perspektiven von unterschiedlichen Standpunkten aus erfolgt. Dadurch kann eine Veränderung wesentlich schneller festgestellt werden, als wenn jede Kamera mit den anderen Kameras zum gleichen Zeitpunkt von dem Areal ein Bild erstellen würde. Weiterhin bildet diese Variante des Verfahrens die Möglichkeit, ein Areal mit mehreren Kameras zu überwachen, wobei ein Energieverbrauch in der Größenordnung anfällt, als wenn eine Kamera kontinuierlich das Areal überwachen würde.

Um die Kameras auch bei Dunkelheit effektiv einsetzen zu können, können sie in vorteilhafter Weise mit einem Restlichtverstärker ausgestattet werden oder als Infrarot-Kamera ausgebildet sein.

In weiterer vorteilhafter Ausgestaltung der Erfindung können die Kamera oder die Kameras mit einem für den vorgesehenen Überwachungseinsatz geeigneten Sensor ausgestattet sein. Bewegungsmelder, insbesondere Infrarotsensoren, können das Eindringen von Fahrzeugen und Personen in das Areal feststellen. Mit thermischen Sensoren, zu denen auch die Infrarotsensoren gezählt werden, können insbesondere Wärmequellen wie Fahrzeuge, Personen oder ausbrechende Brände festgestellt werden. Akustische Sensoren können auf einen für den Überwachungszweck geeigneten Frequenzbereich eingestellt sein, beispielsweise auf Fahrzeuggeräusche, während optische Sensoren auf Helligkeitsschwankungen reagieren, beispielsweise auf Verschattungen. Beim Ansprechen der genannten Sensoren kann eine im Stand-by-Modus verharrende Kamera eingeschaltet werden. Dabei kann gleichzeitig Alarm ausgelöst werden. Zusätzlich kann dieser Kamera hinsichtlich der Bildübermittlung vor den anderen Klameras Priorität eingeräumt werden.

Anhand einer schematischen Darstellung wird die Erfindung näher erläutert.

Die Darstellung zeigt ein Areal 1, das im vorliegenden Ausführungsbeispiel durch einen Kreis symbolisiert wird. Innerhalb dieses Areals 1 stehen sechs Objekte 2, die beobachtet oder geschützt werden sollen. Bei den Objekten 2 kann es sich beispielsweise um Förderpumpen in einem Areal handeln, in dem Öl gefördert wird, oder, im militärischen Bereich, im Gelände verteilt aufgestellte Abwehrwaffen. Das Areal 1 wird im vorliegenden Ausführungsbeispiel durch zwei Kameras 3 und 4 von unterschiedlichen Standorten aus überwacht. Der Blickwinkel 5 der Kamera 3 ist ein anderer wie der Blickwinkel 6 der Kamera 4.

Jede der Kameras 3 und 4 erzeugt zu einem bestimmten Zeitpunkt ein Bild von dem Areal 1. Alle zur Erzeugung eines Bildes erforderlichen Signale der Bildpunkte werden über die Übertragungsstrecken 7 bzw. 8, beispielsweise eine Funkstrecke, an eine Kontrollstation 9 übertragen. Dort werden die Signale von einer Antenne 10 an einer Empfangsstation 11 der Kontrollstation 9 empfangen. Von dort können sie beispielsweise zu einem Rechner 12 weitergeleitet werden, der aus den empfangenen Bildsignalen ein Standbild aufbaut, das die jeweilige Situation zum Zeitpunkt der Bilderzeugung durch die Kamera wiedergibt. In einem Komparator 13 kann das gerade erzeugte Bild mit dem vorhergehenden Bild auf elektronischem Wege verglichen werden. Bei einer festgestellten Abweichung kann mindestens Alarm ausgelöst werden, wie durch den Lautsprecher 14 symbolisiert wird. Das erzeugte Bild kann weiterhin an einen Monitor 15 weitergeleitet werden, wo es auf einem Bildschirm 16 erscheint. Dort kann es durch Personen visuell ausgewertet werden. Das Bild kann aber auch auf diesen Bildschirmen des Monitors das zuvor erzeugte Bild ebenfalls projiziert werden, so dass aus der Überlagerung der beiden Bilder die entsprechende Abweichung abgelesen werden kann. Der Monitor 15 kann sich auch an einem anderen Ort befinden, räumlich getrennt von der Kontrollstation 9, so dass die Bildübertragung dorthin ebenfalls mittels Funk erfolgt.

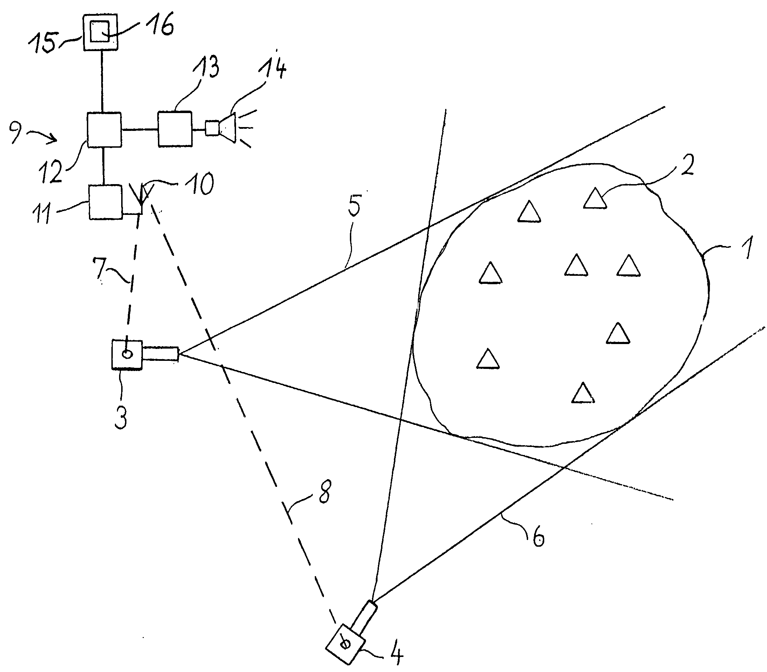

## Patentansprüche

1. Verfahren zur Überwachung eines Areals, das im Blickfeld von mindestens einer Kamera mit elektronischer Bilderzeugung liegt, wozu durch die Kamera in vorgegebenen Zeitabständen oder zu vorgegebenen Zeitpunkten ein Bild als Momentaufnahme von dem Areal erzeugt wird, dass dieses Bild erst nach Abspeicherung aller zur Erzeugung des Bildes erforderlichen Signale der Bildpunkte als Standbild an eine Kontrollstation übermittelt wird und dass das Bild erst dann auf dem Bildschirm eines Monitors in der Kontrollstation angezeigt wird, wenn sämtliche Signale übertragen und das Bild vollständig aufgebaut ist.

2. Verfahren nach Anspruch 1, **dadurch gekennzeichnet, dass** vor der Übertragung der Signale eine Datenkomprimierung erfolgt.

3. Verfahren nach Anspruch 1 oder 2, **dadurch gekennzeichnet, dass** die Übertragung der Bildsignale an die Kontrollstation im Niederfrequenz-Bereich erfolgt.

4. Verfahren nach einem der Ansprüche 1 bis 3, **dadurch gekennzeichnet, dass** die Zeitabstände zwischen den Bilderzeugungen oder die Zeitpunkte der Bilderzeugungen auf den Bedarf eingestellt werden.

5. Verfahren nach einem der Ansprüche 1 bis 4, **dadurch gekennzeichnet, dass** das derzeitige Bild mit dem in einem Bildspeicher der Kontrollstation abgespeicherten Bild verglichen wird, das vor diesem Bild erzeugt wurde und dass bei Feststellung einer Abweichung der Bilder voneinander mindestens Alarm ausgelöst wird.

6. Verfahren nach einem der Ansprüche 1 bis 5, **dadurch gekennzeichnet, dass** mindestens eine weitere Kamera dasselbe Areal überwacht, dass sie das Areal von einem anderen Standort aus einem anderen Blickwinkel betrachtet und dass auch bei dieser Kamera jedes von ihr erzeugte Bild mit dem vorhergehenden Bild verglichen wird und dass bei einer festgestellten Abweichung ebenfalls mindesten Alarm ausgelöst wird.

7. Verfahren nach einem der Ansprüche 1 bis 6, **dadurch gekennzeichnet, dass** die Kamera bzw. die Kameras zwischen den Zeitpunkten, an denen ein Bild des Areals erzeugt wird, in den Stand-by-Modus geschalten ist bzw. sind.

8. Verfahren nach einem der Ansprüche 1 bis 7, **dadurch gekennzeichnet, dass** bei zwei oder mehr Kameras die Kameras im Wechsel ein Bild von dem zu überwachenden Areal erzeugen und dass immer nur eine Kamera ein Bild erzeugt, während die übrigen Kameras in den Stand-by-Modus geschaltet sind.

9. Verfahren nach einem der Ansprüche 1 bis 8, **dadurch gekennzeichnet, dass** die Kamera oder die Kameras zur Bilderzeugung bei Dunkelheit ausgestattet sind.

10. Verfahren nach einem der Ansprüche 1 bis 9, **dadurch gekennzeichnet, dass** die Kamera oder die Kameras mit einem für den vorgesehenen Überwachungseinsatz geeigneten Sensor ausgestattet sind und dass ein ansprechender Sensor eine im Stand-by-Modus geschaltete Kamera einschaltet.

11. Verfahren nach Anspruch 10, **dadurch gekennzeichnet, dass** der aktivierten Kamera hinsichtlich der Bildübermittlung Priorität eingräumt wird.
